# EUROPEAN PATENT APPLICATION

(11) **EP 4 749 942 A1**
(43) Date of publication of application: **27.05.2026**
(21) Application number: 24844225.3
(22) Date of filing: 28.02.2024
(51) Int. Cl.: H04B 7/0456, H04B 7/06

(54) **PRECODING MATRIX INFORMATION TRANSMISSION METHOD AND APPARATUS, AND STORAGE MEDIUM**

(30) Priority: 24.07.2023 CN 202310919424
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); LI, Lun, Shenzhen, Guangdong 518057 (CN); ZHENG, Guozeng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/079118
(87) International publication number: WO 2025/020527

(57) **Abstract**

Provided in the embodiments of the present disclosure are a precoding matrix information transmission method and apparatus, and a storage medium. The method comprises: receiving configuration information sent by means of a second communication node, and on the basis of the configuration information, sending to the second communication node K fragments among L fragments of precoding matrix information, wherein L and K are both positive integers, and K is less than or equal to L. The present disclosure can be used in a wireless communication process.

## Description

The present disclosure claims priority to the Chinese patent application No. 202310919424.7, filed on July 24, 2023, the entire content of which is incorporated in the present disclosure by reference.

### TECHNICAL FIELD

The present disclosure relates to the field of communication technologies, and particularly to a transmission method and apparatus for precoding matrix information, and a storage medium.

### BACKGROUND

A base station, when sending data to a terminal, precodes the data by a precoding matrix applied on an antenna, to match channel transmission data and improve data transmission performance. In the precoding process, the terminal sends precoding matrix information to the base station according to measurement results for measurement signals, enabling the base station to recover the precoding matrix according to the precoding matrix information.

### SUMMARY

In a first aspect, it provides a transmission method for precoding matrix information, including: receiving configuration information sent from a second communication node; and sending K segments among L segments of precoding matrix information to the second communication node, according to the configuration information, where both L and K are positive integers, and K is less than or equal to L.

In another aspect, it provides a transmission method for precoding matrix information, including: sending configuration information to a first communication node; and receiving K segments among L segments of precoding matrix information sent from the first communication node, where both L and K are positive integers, and K is less than or equal to L.

In yet another aspect, it provides a transmission apparatus for precoding matrix information, including: a communication unit and a processing unit. The communication unit is configured to receive configuration information sent from a second communication node; and the processing unit is configured to send K segments among L segments of precoding matrix information to the second communication node, according to the configuration information, where both L and K are positive integers, and K is less than or equal to L.

In yet another aspect, it provides a transmission apparatus for precoding matrix information, including: a communication unit and a processing unit. The processing unit is configured to indicate the communication unit to send configuration information to a first communication node; and the processing unit is further configured to indicate the communication unit to receive K segments among L segments of precoding matrix information sent from the first communication node, where both L and K are positive integers, and K is less than or equal to L.

In yet another aspect, it provides a transmission apparatus for precoding matrix information, including: a memory and a processor; the memory is coupled with the processor; the memory is configured to store a computer program; and the processor, when executing the computer program, implements the transmission method of precoding matrix information in any one of the above aspects or embodiments.

In yet another aspect, it provides a computer-readable storage medium, computer program instructions are stored on the computer-readable storage medium, and the computer program instructions, when executed by a processor, implement the transmission method of precoding matrix information in any one of the above aspects or embodiments.

In yet another aspect, it provides a computer program product, the computer program product includes computer program instructions, and the computer program instructions, when executed by a processor, implement the transmission method of precoding matrix information in any one of the above aspects or embodiments.

### BRIEF DESCRIPTION OF THE DRAWINGS

To illustrate technical solutions in the present disclosure more clearly, the drawings to be used in some embodiments of the present disclosure are briefly described below, and obviously, the drawings in the following description are only drawings of some embodiments of the present disclosure, and other drawings may also be obtained by those ordinary skilled in the art according to these drawings.
FIG. 1 is a system architecture diagram of a communication system according to some embodiments.
FIG. 2 is a schematic flowchart of a transmission method of precoding matrix information according to some embodiments.
FIG. 3 is a structural schematic diagram of a transmission apparatus for precoding matrix information applied to a first communication node according to some embodiments.
FIG. 4 is a structural schematic diagram of a transmission apparatus for precoding matrix information applied to a second communication node according to some embodiments.
FIG. 5 is a schematic diagram of a hardware structure of a transmission apparatus for precoding matrix information according to some embodiments.

### DETAILED DESCRIPTION

The following will describe the technical solutions in the present disclosure clearly and completely, in conjunction with the drawings in the present disclosure, and obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

It should be noted that in the present disclosure, terms such as "exemplary (exemplarily)" or "for example" are used to represent examples, illustrations, or descriptions. Any embodiment or design solution described with "exemplary (exemplarily)" or "for example" should not be interpreted as being more preferred or advantageous than other embodiments or design solutions. Specifically, the use of the terms such as "exemplary (exemplarily)" or "for example", etc., is intended to present related concepts in a specific manner.

Hereinafter, the terms such as "first", "second", etc., are used only for descriptive purposes and cannot be construed as indicating or implying relative importance or implicitly indicating the number of the indicated technical features. Thus, features limited with "first", "second", etc., may explicitly or implicitly include one or more of the features.

In the description of the present disclosure, unless otherwise specified, the symbol "/" means "or", and for example, A/B may represent A or B. Herein, "and/or" is only used to describe an associated relationship between associated objects, representing that there may be three relationships, and for example, A and/or B may represent: only A, only B, as well as A and B. Additionally, "at least one" means one or more, and "multiple/plurality of" means two or more.

In the related technology, the base station, when sending data to the terminal, precodes the data by a precoding matrix, to match channel transmission data and improve the data transmission performance.

The precoding process includes that: the base station indicates a reference signal resource to the terminal, and sends a reference signal; the terminal measures the reference signal according to the reference signal resource indicated by the base station, and determines channel state information between the base station and the terminal; the terminal determines a precoding matrix according to the channel state information, and then, pre-processes the precoding matrix to determine precoding matrix information of the precoding matrix; and the terminal reports the precoding matrix information to the base station. After receiving the precoding matrix information, the base station recovers the precoding matrix according to the precoding matrix information, encodes to-be-transmitted data according to the precoding matrix, and sends the encoded to-be-transmitted data through a transmission antenna.

When the terminal sends the precoding matrix information to the base station, resources for the terminal to send the precoding matrix information may change. For example, the terminal may increase or decrease the resources for transmitting the precoding matrix information according to elapsed time. As the resources for transmitting the precoding matrix information change, the number of precoding matrix information that the terminal can transmit also changes accordingly. When transmission resources are increased, the terminal may transmit more precoding matrix information; and when transmission resources are decreased, the number of precoding matrix information that the terminal can transmit is decreased accordingly.

However, after the current terminal determines the precoding matrix information, the number of precoding matrix information is determined accordingly, so the terminal cannot flexibly adjust the number of the transmitted precoding matrix information to ensure the performance of the precoding matrix recovered according to the transmitted precoding matrix information. Therefore, how to flexibly adjust the number of transmitted precoding matrix information has become a current technical problem that needs to be solved urgently.

To solve the above problem in the prior art, the embodiments of the present disclosure provide a transmission method for precoding matrix information, where a second communication node sends configuration information to a first communication node, the first communication node, after receiving the configuration information, sends K segments among L segments of the precoding matrix information to the second communication node, according to the configuration information, where both L and K are positive integers, and K is less than or equal to L.

In this way, the first communication node may need to transmit only the required number of segments selected from all segments in the precoding matrix information, instead of transmitting all the segments. When the number of resources for transmitting precoding matrix information changes in the first communication node, the first communication node may flexibly adjust the number of transmitted segments of the precoding matrix information based on the change in the number of resources, thereby solving the problem in the prior art that the terminal cannot flexibly adjust the number of transmitted precoding matrix information.

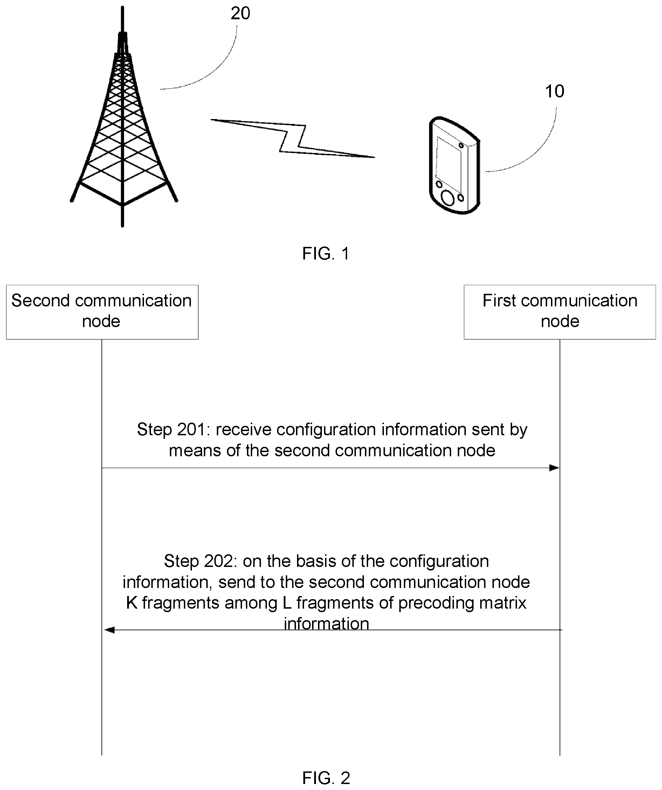

The transmission method for precoding matrix information provided in the embodiments of the present disclosure may be applied to the communication system shown in FIG. 1, and FIG. 1 shows an architecture schematic diagram of a communication system provided in the embodiments of the present disclosure. As shown in FIG. 1, the communication system includes a first communication node 10 and a second communication node 20.

In wireless communication scenarios, the first communication node and the second communication node communicate with each other through a radio channel. For example, the first communication node is a terminal and the second communication node is a base station, and the base station and the terminal communicate with each other through a radio channel. For another example, the first communication node is a terminal and the second communication node is a wireless router, and the wireless router and the terminal communicate with each other through a radio channel. For another example, the first communication node is a first base station and the second communication node is a second base station, and the first base station and the second base station communicate with each other through a radio channel. For another example, the first communication node is a first terminal and the second communication node is a second terminal, and the first terminal and the second terminal communicate with each other through a radio channel. For another example, the first communication node is a repeater and the second communication node is a base station, and the base station and the repeater communicate with each other through a radio channel. For another example, the first communication node is a terminal and the second communication node is a repeater, and the repeater and the terminal communicate with each other through a radio channel. For another example, the first communication node is a first repeater and the second communication node is a second repeater, and the first repeater and the second repeater communicate with each other through a radio channel. For another example, the first communication node is a base station and the second communication node is a satellite, and the satellite and the base station communicate with each other through a radio channel. For another example, the first communication node is a satellite and the second communication node is a base station, and the base station and the satellite communicate with each other through a radio channel. For another example, the first communication node is a terminal and the second communication node is a satellite, and the satellite and the terminal communicate with each other through a radio channel. For another example, the first communication node is a satellite and the second communication node is a terminal, and the terminal and the satellite with each other through a radio channel. For another example, the first communication node is a ground device and the second communication node is an aircraft, and the aircraft and the ground device communicate with each other through a radio channel. For another example, the first communication node is a first aircraft and the second communication node is a second aircraft, and the first aircraft and the second aircraft communicate with each other through a radio channel.

In the embodiments of the present disclosure, an example of the first communication node 10 as the terminal and the second communication node 20 as the base station is taken for illustration.

In some embodiments, the second communication node 20 provides radio access services to multiple terminals. For example, a base station provides a service coverage region (also referred to as a cell). Terminals entering into this region may communicate with the base station via radio signals, so as to accept the radio access services provided by the base station.

In some embodiments, the second communication node 20 may be a base station in long term evolution (LTE) or long term evolution advanced (LTEA), an evolutionary base station (evolutional node B, eNB or eNodeB), a base station device in the 5G network, or a base station in future communication systems, etc., and the base station may include various network-side devices such as various macro base stations, micro base stations, home base stations, radio remote units, reconfigurable intelligent surfaces (RIS), routers, and wireless fidelity (WIFI) devices, etc.

In some embodiments, the first communication node 10 may be a device with a radio transceiver function, which may be deployed on land (including indoor or outdoor, handheld, worn, or vehicle-mounted); may be deployed on water (e.g., a ship, etc.); or may also be deployed in the air (e.g., an airplane, a balloon, a satellite, etc.). The terminal may be a mobile phone, a tablet computer (Pad), a computer with a wireless transceiver function, a virtual reality (VR) terminal, an augmented reality (AR) terminal, a wireless terminal in industrial control, a wireless terminal in self driving, a wireless terminal in remote medical, a wireless terminal in smart grid, a wireless terminal in transportation safety, a wireless terminal in smart city, a wireless terminal in smart home, etc. The embodiments of the present disclosure do not limit the application scenarios. The terminal sometimes may also be referred to as a user, user equipment (UE), access terminal, UE unit, UE station, mobile station, mobile platform, remote station, remote terminal, mobile device, UE terminal, wireless communication device, UE agent, UE apparatus, etc., which is not limited to the embodiments of the present disclosure.

The embodiments of the present disclosure are applicable to downlink data transmissions, applicable to uplink data transmissions, and applicable to device-to-device data transmissions. For a downlink data transmission, the transmitter side is a base station and the corresponding receiver side is a terminal. For an uplink transmission, the transmitter side is a terminal and the corresponding receiver side is a base station. For a device-to-device data transmission, the transmitter side is a terminal and the corresponding receiver side is also a terminal. The transmitter side and the receiver side in the present disclosure both may include an encoding apparatus and/or a decoding apparatus, which may modulate and encode the to-be-sent information, and may demodulate and decode the received encoded information, thereby enabling information transmissions between the transmitter side device and the receiver side device. The embodiments of the present disclosure are not limited thereto.

It should be noted that FIG. 1 is only an exemplary framework diagram, and the number of devices and names of the respective devices included in FIG. 1 are not limited, and in addition to the devices shown in FIG. 1, the communication system may also include other devices, such as a core network device.

The application scenarios for the embodiments of the present disclosure are not limited. The system architectures and service scenarios described in the embodiments of the present disclosure are intended to more clearly illustrate the technical solutions of the embodiments of the present disclosure, and do not limit the technical solutions provided in the embodiments of the present disclosure, and those ordinary skilled in the art may know that with the evolution of the network architectures and the emergence of new service scenarios, the technical solutions provided in the embodiments of the present disclosure may also be applicable for similar technical problems.

FIG. 2 shows a schematic flowchart of a transmission method for precoding matrix information provided in the present disclosure, and as shown in FIG. 2, the transmission method for precoding matrix information includes the following step 201 and step 202.

Step 201: a second communication node sends configuration information to a first communication node. Accordingly, the first communication node receives the configuration information sent from the second communication node.

In some embodiments, the configuration information is used to indicate a reference signal resource.

In some other embodiments, the configuration information is used to indicate the first communication node to report at least one of a precoding matrix and precoding matrix information, in addition to indicating the reference signal resource.

Step 202: the first communication node sends K segments among L segments of precoding matrix information to the second communication node, according to the configuration information. Accordingly, the second communication node receives the K segments among the L segments of the precoding matrix information, sent from the first communication node.

Both L and K are positive integers, and K is less than or equal to L.

As an exemplary implementation of step 202, the first communication node determines a reference signal resource according to configuration information, measures a reference signal to obtain a measurement result, and determines a channel coefficient between the first communication node and the second communication node, according to the measurement result. The first communication node determines a precoding matrix used when transmitting data between the first communication node and the second communication node, according to the channel coefficient, and processes the precoding matrix to determine precoding matrix information. The first communication node splits the precoding matrix information into L segments, and selects K segments among the L segments to send to the second communication node.

In some embodiments, after the second communication node receives the precoding matrix information, the second communication node recovers the precoding matrix according to the K segments among the L segments of the precoding matrix information, and precodes data according to the precoding matrix, to obtain precoded data. Then, the second communication node may send the precoded data to the first communication node.

It can be understood that the reference signal sent from the second communication node to the first communication node is a downlink reference signal. For example, in an LTE system of the 4th generation wireless communication technology, the downlink reference signal for reporting channel state information includes a cell-specific reference signal (CRS) and a channel-state information reference signal (CSI-RS). For another example, in a new radio (NR) system of the 5th generation wireless communication technology, the downlink reference signal for reporting channel state information includes a CSI-RS.

In the embodiments of the present disclosure, when sending precoding matrix information to the second communication node, the first communication node selects all or some of segments from the L segments of the precoding matrix information to send. In this way, the first communication node does not need to transmit all segments of the precoding matrix information, but only needs to select the required number of segments therefrom to transmit. When the number of resources available for transmitting the precoding matrix information in the first communication node changes, the first communication node may flexibly adjust the number of transmitted segments of the precoding matrix information based on the change in the number of resources, which solves the problem in the prior art that the terminal cannot flexibly adjust the number of transmitted precoding matrix information.

In the embodiments of the present disclosure, the first communication node may split the precoding matrix information into L segments, and select K segments from the L segments for reporting. The following will detail the precoding matrix information, the L segments in the precoding matrix information, and the K segments in the L segments involved in the embodiments of the present disclosure.

### I. Precoding matrix information.

The precoding matrix information is precoding matrix information obtained by the first communication node processing a precoding matrix. The precoding matrix information is represented in the form of a bit, or the precoding matrix information is represented in the form of an element represented by a bit group.

In some embodiments, a method for the first communication node processing the precoding matrix information to determine the precoding matrix information, includes: the first communication node quantizing the precoding matrix information to determine the precoding matrix information. The above quantization includes but is not limited to at least one of: scalar quantization, vector quantization, or codebook quantization. Specific implementations for the scalar quantization, vector quantization, or codebook quantization may refer to the prior art and are not further repeated here.

In some other embodiments, a method for the first communication node processing the precoding matrix information to determine the precoding matrix information, includes: the first communication node encoding the precoding matrix information to determine the precoding matrix information. The above encoding method includes but is not limited to at least one of: compression encoding, encoding via a machine learning algorithm or a machine learning model. Specific implementations of the compression encoding, encoding via a machine learning algorithm or a machine learning model may refer to the prior art and are not further repeated here.

### II. L segments in the precoding matrix information.

In the embodiments of the present disclosure, a segment among the L segments includes one or more bits; or, a segment includes one or more elements, with an element corresponding to a bit group.

In some embodiments, the first communication node generates L segments of the precoding matrix information by quantizing or encoding the precoding matrix information.

The number of L segments may be determined by the maximum number of segments obtained through quantizing or encoding the precoding matrix information, or determined by the number of segments of the precoding matrix information registered by the first communication node to the second communication node, or determined by the number of segments configured by the second communication node to the first communication node via configuration information, which is not limited in the present disclosure.

It should be noted that in the embodiments of the present disclosure, the first communication node may determine L segments through the following two modes.

Mode 1: the first communication node directly divides the precoding matrix information into L segments.

In mode 1, a rank of the precoding matrix is R, and the value of R is an integer greater than 1.

The value of L may be an integer multiple of R, or the value of L may not be an integer multiple of R, which is not limited in the present disclosure.

Mode 2: the first communication node determines L segments of the precoding matrix information according to segments of each layer of the precoding matrix information.

As an exemplary implementation, the rank of the precoding matrix is R, and accordingly, the number of layers of the precoding matrix is also R. The first communication node determines the number of segments in each layer of the precoding matrix information, and determines a total number of segments in all layers as the L segments of the precoding matrix information.

For example, the first communication node parses the number of segments of a 1st layer of the precoding matrix information as L₁; the number of segments of a 2nd layer of the precoding matrix information as L₂; and so on; the number of segments of an R-th layer of the precoding matrix information as L_{R}. In this case, the first communication node determines that the number L of segments of the precoding matrix information satisfies: L = L₁ + L₂ +... + L_{R}.

As an example, the rank of the precoding matrix is 1, that is, the number of layers of the precoding matrix is 1. The first communication node determines the number of segments in the 1st layer of the precoding matrix information as L1. In this case, the first communication node may determine that the number L of segments of the precoding matrix information satisfies: L = L₁.

As another example, the rank of the precoding matrix is 2, that is, the number of layers of the precoding matrix is 2. The first communication node determines the number of segments in the 1st layer of the precoding matrix information as L₁, and the number of segments in the 2nd layer of the precoding matrix information as L₂. In this case, the first communication node may determine that the number L of segments of the precoding matrix information satisfies: L = L₁ + L₂.

As yet another example, the rank of the precoding matrix is 3, that is, the number of layers of the precoding matrix is 3. The first communication node determines the number of segments in the 1st layer of the precoding matrix information as L₁, the number of segments in the 2nd layer of the precoding matrix information as L₂, and the number of segments in the 3rd layer of the precoding matrix information as L₃. In this case, the first communication node may determine that the number L of segments of the precoding matrix information satisfies: L = L₁ + L₂ + L₃.

As yet another example, the rank of the precoding matrix is 4, that is, the number of layers of the precoding matrix is 4. The first communication node determines the number of segments in the 1st layer of the precoding matrix information as L₁, the number of segments in the 2nd layer of the precoding matrix information as L₂, the number of segments in the 3rd layer of the precoding matrix information as L₃, and the number of segments in the 4th layer of the precoding matrix information as L₄. In this case, the first communication node may determine that the number L of segments of the precoding matrix information satisfies: L = L₁ + L₂ + L₃ + L₄.

It should be noted that in the embodiments of the present disclosure, segments of a layer of the precoding matrix information refer to segments of precoding matrix information corresponding to the layer of the precoding matrix.

It can be understood that in a case where the precoding matrix includes multiple layers, the number of segments in each layer of the precoding matrix information may be the same or not completely the same. The present disclosure is not limited thereto. The number of segments in each layer of the precoding matrix information being not completely the same, refers to that there is at least one layer corresponding to the number of segments of precoding matrix information different from the number of segments of precoding matrix information corresponding to one or more other layers.

### III. K segments among the L segments of the precoding matrix information.

Since the number of resources allocated by the first communication node for transmitting the precoding matrix information will change, it cannot transmit all of the precoding matrix information, and therefore, the first communication node may send K segments among the L segments of the precoding matrix information. In this way, the first communication node may flexibly select the number of the transmitted precoding matrix information according to the number of transmission resources, which avoids a transmission failure of the precoding matrix information due to the number of the precoding matrix information to be transmitted greater than the number that the transmission resources can transmit, or avoids a situation where the second communication node cannot accurately recover the precoding matrix due to the insufficient transmission number, and may avoid the waste of transmission resources due to the number of the precoding matrix information to be transmitted less than the number that the transmission resources can transmit.

In the embodiments of the present disclosure, the exemplary implementations of the first communication node selecting K segments from L segments include Scenarios 1 through 6. The following will provide detailed explanations for each scenario.

Scenario 1: the K segments are first K segments in sort order related to the L segments.

It can be understood that the K segments may also be last K segments in a sort sequence related to the L segments, or K segments at positions in any specified order, which is not limited in the present disclosure.

The above sort order related to the L segments includes any one of: mapping order of the L segments, registration order of the L segments, and configuration order of the L segments.

The mapping order of the L segments is order in which the L segments are mapped to an information sequence corresponding to the precoding matrix information. The registration order of the L segments is order in which the L segments are registered by the first communication node to the second communication node. The configuration order of the L segments is order in which the L segments are configured by the second communication node.

In the following, the mapping order of the L segments, the registration order of the L segments, and the configuration order of the L segments are described in detail in conjunction with exemplary subdivided scenarios.

### Scenario 1-1: mapping order of L segments.

In some embodiments, the mapping order of the L segments may be determined by the following process: the first communication node splits the precoding matrix information into L segments and determines an information sequence for mapping these L segments. After that, the first communication node maps each of the L segments into the information sequence respectively. The order of each segment in the information sequence is the mapping order of this segment in the L segments.

In this scenario, the first communication node determines that the first K (or last K) segments among the L segments in the mapping order are K segments to be reported to the second communication node.

### Scenario 1-2: registration order of L segments.

In some embodiments, the registration order of the L segments may be determined by the following process: the first communication node registers L segments of the precoding matrix information to the second communication node in advance. The second communication node records the order of the L segments of the precoding matrix information in the registration record. The first communication node determines the registration order in which the first communication node registers the L segments or the recording order of the L segments in the registration record information of the second communication node, as the registration order of the L segments.

In this scenario, the first communication node determines that the first K (or last K) segments among the L segments in the mapping order are K segments to be reported to the second communication node.

### Scenario 1-3: configuration order of L segments.

In some embodiments, the configuration order of the L segments may be determined by the following process: the second communication node configures the L segments of the precoding matrix information to the first communication node through configuration information, and the order of the L segments in the configuration information is the configuration order of the L segments.

In this scenario, the first communication node determines that the first K (or last K) segments among the L segments in the configuration order are K segments to be reported to the second communication node.

It should be noted that the sort order of the L segments given in scenario 1-1, scenario 1-2, and scenario 1-3 is the order corresponding to the way in which the first communication node divides the precoding matrix information into L segments in the above mode 1.

It can be understood that, in addition to the above sort order, the first communication node may also select K segments from L segments in other order, to report to the second communication node. For example, the first communication node may select K segments with the highest priority to report to the second communication node in priority order of the respective segments.

Scenario 2: the K segments are K segments with bit numbers satisfying a condition among the L segments.

In this scenario, the first communication node determines K segments from the L segments according to the bit number corresponding to each of the L segments.

For example, the first communication node determining K segments from the L segments according to the bit number corresponding to each of the L segments, includes: the first communication node determining first K segments with the smallest bit number from the L segments.

Alternatively, the first communication node determines first K segments with the largest bit number from the L segments.

Alternatively, the first communication node determines K segments with a bit number less than or equal to a first threshold, from L segments.

Alternatively, the first communication node determines K segments with a bit number greater than or equal to a second threshold, from L segments.

Alternatively, the first communication node determines K segments with a bit number greater than or equal to a third threshold and less than or equal to a fourth threshold, from L segments.

Alternatively, the first communication node determines K segments with a sum of bit numbers less than or equal to a fifth threshold, from L segments.

Alternatively, the first communication node determines K segments with a sum of bit numbers greater than or equal to a sixth threshold, from L segments.

It can be understood that the sizes of the first threshold to the sixth threshold in the embodiments of the present disclosure may be set as needed, which is not limited in the present disclosure.

Scenario 3: the K segments include: all or some of segments corresponding to an S-th layer in the precoding matrix information. S is less than or equal to R, R is the rank of the precoding matrix, and both S and R are positive integers.

As an example, the rank of the precoding matrix is 4, that is, the number of layers of the precoding matrix is 4.

The K segments include: all or some of segments corresponding to a 1st layer in the precoding matrix information.

Alternatively, the K segments include: all or some of segments corresponding to a 2nd layer in the precoding matrix information.

Alternatively, the K segments include: all or some of segments corresponding to a 3rd layer in the precoding matrix information.

Alternatively, the K segments include: all or some of segments corresponding to a 4th layer in the precoding matrix information.

Scenario 4: the K segments include: all or some of segments corresponding to Q layers in the precoding matrix information. R is the rank of the precoding matrix. Both Q and R are positive integers, and Q is less than or equal to R.

As an example, the rank of the precoding matrix is 4. The value of Q may be 1, 2, 3, 4, etc., which is not limited thereto.

In the case where the value of Q is 4, the K segments include all or some of segments in precoding matrix information corresponding to each layer of 4 layers of the precoding matrix.

In the case where the value of Q is 3, the K segments include all or some of segments in precoding matrix information corresponding to 3 layers of 4 layers of the precoding matrix. For example, the K segments may include all or some of segments in precoding matrix information corresponding to the 1st layer, the 2nd layer, and the 3rd layer of the precoding matrix. Alternatively, the K segments may include all or some of segments in precoding matrix information corresponding to the 1st layer, the 2nd layer, and the 4th layer of the precoding matrix. Alternatively, the K segments may include all or some of segments in precoding matrix information corresponding to the 1st layer, the 3rd layer, and the 4th layer of the precoding matrix. Alternatively, the K segments may include all or some of segments in precoding matrix information corresponding to the 2nd layer, the 3rd layer, and the 4th layer of the precoding matrix.

In the case where the value of Q is 2, the K segments include all or some of segments in precoding matrix information corresponding to 2 layers of 4 layers of the precoding matrix. For example, the K segments may include all or some of segments in precoding matrix information corresponding to the 1st layer and the 2nd layer of the precoding matrix. Alternatively, the K segments may include all or some of segments in precoding matrix information corresponding to the 1st layer and the 3rd layer of the precoding matrix. Alternatively, the K segments may include all or some of segments in precoding matrix information corresponding to the 1st layer and the 4th layer of the precoding matrix. Alternatively, the K segments may include all or some of segments in precoding matrix information corresponding to the 2nd layer and the 3rd layer of the precoding matrix. Alternatively, the K segments may include all or some of segments in precoding matrix information corresponding to the 2nd layer and the 4th layer of the precoding matrix. Alternatively, the K segments may include all or some of segments in precoding matrix information corresponding to the 3rd layer and the 4th layer of the precoding matrix.

In the case where the value of Q is 1, the K segments include all or some of segments in precoding matrix information corresponding to 1 layer of 4 layers of the precoding matrix. For example, the K segments may include all or some of segments in precoding matrix information corresponding to the 1st layer of the precoding matrix; alternatively, the K segments may include all or some of segments in precoding matrix information corresponding to the 2nd layer of the precoding matrix; alternatively, the K segments may include all or some of segments in precoding matrix information corresponding to the 3rd layer of the precoding matrix; alternatively, the K segments may include all or some of segments in precoding matrix information corresponding to the 4th layer of the precoding matrix.

Scenario 5: the K segments are K segments determined from an I-th segment corresponding to each layer in the precoding matrix information. I is a positive integer.

In some embodiments, the first communication node may determine the I-th segment corresponding to a layer based on sort order of segments within the layer. The sort order of the segments within the layer includes any one of: index order of the segments within the layer, mapping order of the segments within the layer, registration order of the segments within the layer, configuration order of the segments within the layer, or size order of bit numbers of the segments within the layer.

Below, in conjunction with exemplary subdivided scenarios, the index order of the segments within the layer, the mapping order of the segments within the layer, the registration order of the segments within the layer, the configuration order of the segments within the layer, and the size order of bit numbers of the segments within the layer mentioned above are described in detail.

### Scenario 5-1: index order of segments within a layer.

In this scenario, the first communication node sorts segments within each layer of the precoding matrix information in index order, and selects a segment with an index I from each layer, to obtain a total of R segments. The first communication node determines K segments from the R segments. In this case, K is a positive integer less than or equal to R.

As an example, the value of R is 4, that is, the rank of the precoding matrix is 4. The first communication node selects an I-th segment with an index I from a 1st layer, an I-th segment with an index I from a 2nd layer, an I-th segment with an index I from a 3rd layer, and an I-th segment with an index I from a 4th layer in the precoding matrix information, respectively, to obtain 4 segments. The first communication node selects all or some of segments from the 4 segments, as K segments.

### Scenario 5-2: mapping order of segments within a layer.

In some embodiments, the mapping order of the segments within the layer is determined by the following process: the first communication node splits the precoding matrix information into L segments, and each layer includes a corresponding number of segments. After that, the first communication node will map segments of each layer into the information sequence, respectively. The mapping order of a segment in its layer mapped to the information sequence is recorded as the mapping order of segments within the layer of this segment.

After determining the mapping order of segments within the layer of each segment, the first communication node selects a segment with the mapping order of I from each layer of the precoding matrix information, to obtain a total of R segments. The first communication node determines K segments from the R segments. In this case, K is a positive integer less than or equal to R.

As an example, the value of R is 4, that is, the rank of the precoding matrix is 4. The first communication node selects an I-th segment with the mapping order of I from a 1st layer, an I-th segment with the mapping order of I from a 2nd layer, an I-th segment with the mapping order of I from a 3rd layer, and an I-th segment with the mapping order of I from a 4th layer in the precoding matrix information, respectively, to obtain 4 segments. The first communication node selects all or some of segments from the 4 segments, as K segments.

### Scenario 5-3: registration order of segments within a layer.

In some embodiments, the registration order of the segments within the layer is determined as follows: the first communication node registers L segments of the precoding matrix information to the second communication node. In the registration process, the first communication node will register segments within each layer in order respectively, and the second communication node will record these segments in the record information. The registration order of a segment within its layer or the registration record information order within a layer to which a segment belongs is the registration order of segments within the layer of the segment. For example, the registration order of each segment within a j-th layer is the registration order in which the first communication node registers each segment within the j-th layer, or the record order of each segment in the registration record information of the second communication node. j is a positive integer less than or equal to R.

After determining the registration order of segments within a layer of each segment, the first communication node selects a segment with the registration order of I from each layer of the precoding matrix information, to obtain a total of R segments. The first communication node determines K segments from the R segments. In this case, K is a positive integer less than or equal to R.

As an example, the value of R is 4, that is, the rank of the precoding matrix is 4. The first communication node selects an I-th segment with the registration order of I from a 1st layer, an I-th segment with the registration order of I from a 2nd layer, an I-th segment with the registration order of I from a 3rd layer, and an I-th segment with the registration order of I from a 4th layer in the precoding matrix information, respectively, to obtain 4 segments. The first communication node selects all or some of segments from the 4 segments, as K segments.

### Scenario 5-4: configuration order of segments within a layer.

In some embodiments, the configuration order of the segments within the layer is determined as follows: the second communication node configures L segments of the precoding matrix information to the first communication node through configuration information, where the configuration order of the segments within the layer for each layer is different. The configuration order of a segment within its layer is the configuration order of segments within the layer of this segment. For example, the configuration order of each segment within a j-th layer is the order of each segment within the j-th layer in the configuration information sent from the second communication node to the first communication node.

After determining the configuration sequence of segments within a layer of each segment, the first communication node selects a segment with the configuration sequence of I from each layer of the precoding matrix information, to obtain a total of R segments. The first communication node determines K segments from the R segments. In this case, K is a positive integer less than or equal to R.

As an example, the value of R is 4, that is, the rank of the precoding matrix is 4. The first communication node selects an I-th segment with the configuration order of I from a 1st layer, an I-th segment with the configuration order of I from a 2nd layer, an I-th segment with the configuration order of I from a 3rd layer, and an I-th segment with the configuration order of I from a 4th layer in the precoding matrix information, respectively, to obtain 4 segments. The first communication node selects all or some of segments from the 4 segments, as K segments.

### Scenario 5-5: size order of bit numbers of segments within a layer.

In this scenario, the first communication node sorts segments within each layer of the precoding matrix information in descending order of bit numbers (or in ascending order of bit numbers, which is not limited in the present disclosure), and selects an I-th segment with the bit number order of I from each layer, to obtain a total of R segments. The first communication node determines K segments from the R segments. In this case, K is a positive integer less than or equal to R.

As an example, the value of R is 4, that is, the rank of the precoding matrix is 4. The first communication node selects an I-th segment with the bit number order of I from a 1st layer, an I-th segment with the bit number order of I from a 2nd layer, an I-th segment with the bit number order of I from a 3rd layer, and an I-th segment with the bit number order of I from a 4th layer in the precoding matrix information, respectively, to obtain 4 segments. The first communication node selects all or some of segments from the 4 segments, as K segments.

Scenario 6: the K segments are K segments determined from a 1st segment to an I-th segment corresponding to each of Q layers in the precoding matrix information, where Q is less than or equal to R, R is the rank of the precoding matrix, and I, Q and R are positive integers.

In some embodiments, the first communication node may determine a 1st segment to an I-th segment corresponding to a layer based on the sort order of segments within the layer. The sort order of segments within the layer is any one of: index order of the segments within the layer, mapping order of the segments within the layer, registration order of the segments within the layer, configuration order of the segments within the layer, or size order of bit numbers of the segments within the layer.

Below, in conjunction with exemplary subdivided scenarios, the index order of the segments within the layer, the mapping order of the segments within the layer, the registration order of the segments within the layer, the configuration order of the segments within the layer, and the size order of bit numbers of the segments within the layer are described in detail.

### Scenario 6-1: index order of segments within a layer.

In this scenario, the first communication node sorts segments within each layer of the precoding matrix information in index order, and selects I segments with index order 1 to index order I from each layer, to obtain a total of I × R segments.

The first communication node determines K segments from the I × R segments. In this case, K is a positive integer less than or equal to I × R.

As an example, the value of R is 4, that is, the rank of the precoding matrix is 4. The first communication node selects I segments with index order 1 to index order I from a 1st layer, I segments with index order 1 to index order I from a 2nd layer, I segments with index order 1 to index order I from a 3rd layer, and I segments with index order 1 to index order I from a 4th layer in the precoding matrix information, respectively, to obtain 4 × I segments. The first communication node selects all or some of segments from the 4 × I segments, as K segments.

### Scenario 6-2: mapping order of segments within a layer.

In this scenario, the first communication node selects I segments with mapping order 1 to mapping order I from each layer of the precoding matrix information, to obtain a total of I×R segments. The first communication node determines K segments from the I×R segments. K is a positive integer less than or equal to I× R.

The determination process for the mapping order of segments within a layer may refer to the description in the above scenario 5-2, and will not be repeated here.

As an example, the value of R is 4, that is, the rank of the precoding matrix is 4. The first communication node selects I segments with mapping order 1 to mapping order I from a 1st layer, I segments with mapping order 1 to mapping order I from a 2nd layer, I segments with index order 1 to mapping mapping I from a 3rd layer, and I segments with mapping order 1 to mapping order I from a 4th layer in the precoding matrix information, respectively, to obtain 4 × I segments. The first communication node selects all or some of segments from the 4×I segments, as K segments.

### Scenario 6-3: registration order of segments within a layer.

In this scenario, the first communication node selects I segments with registration order 1 to registration order I from each layer of the precoding matrix information, to obtain a total of I×R segments. The first communication node determines K segments from the I × R segments. K is a positive integer less than or equal to I × R.

The determination process for the registration order of segments within a layer may refer to the description in the above scenario 5-3, and will not be repeated here.

As an example, the value of R is 4, that is, the rank of the precoding matrix is 4. The first communication node selects I segments with registration order 1 to registration order I from a 1st layer, I segments with registration order 1 to registration order I from a 2nd layer, I segments with registration order 1 to registration order I from a 3rd layer, and I segments with registration order 1 to registration order I from a 4th layer in the precoding matrix information, respectively, to obtain 4 × I segments. The first communication node selects all or some of segments from the 4×I segments, as K segments.

### Scenario 6-4: configuration sequence of segments within a layer.

In this scenario, the first communication node selects I segments with configuration order 1 to configuration order I from each layer of the precoding matrix information, to obtain a total of I×R segments. The first communication node determines K segments from the I × R segments. K is a positive integer less than or equal to I×R.

The determination process for the configuration order of segments within a layer may refer to the description in the above scenario 5-4, and will not be repeated here.

As an example, the value of R is 4, that is, the rank of the precoding matrix is 4. The first communication node selects I segments with configuration order 1 to configuration order I from a 1st layer, I segments with configuration order 1 to configuration order I from a 2nd layer, I segments with configuration order 1 to configuration order I from a 3rd layer, and I segments with configuration order 1 to configuration order I from a 4th layer in the precoding matrix information, respectively, to obtain 4 × I segments. The first communication node selects all or some of segments from the 4 × I segments, as K segments.

### Scenario 6-5: size order of bit numbers of segments within a layer.

In this scenario, the first communication node sorts segments within each layer of the precoding matrix information in size order of bit numbers, and selects I segments with bit number order 1 to bit number order I from each layer, to obtain a total of I×R segments. The first communication node determines K segments from the I×R segments. K is a positive integer less than or equal to I × R.

The determination process for the bit number order of segments within a layer may refer to the description in the above scenario 5-5, and will not be repeated here.

As an example, the value of R is 4, that is, the rank of the precoding matrix is 4. The first communication node selects I segments with bit number order 1 to bit number order I from a 1st layer, I segments with bit number order 1 to bit number order I from a 2nd layer, I segments with bit number order 1 to bit number order I from a 3rd layer, and I segments with bit number order 1 to bit number order I from a 4th layer in the precoding matrix information, respectively, to obtain 4 × I segments. The first communication node selects all or some of segments from the 4 × I segments, as K segments.

In the case where the sort order related to the L segments is the mapping order of the L segments, the mapping order of the L segments will be described in detail.

In some embodiments, the mapping order of the L segments is determined according to a layer index corresponding to each of the L segments and a segment index within a layer corresponding to each of the L segments.

As an embodiment, a segment with a smaller layer index is before a segment with a larger layer index in the mapping order of the L segments; and for two segments with a same layer index, a segment with a smaller segment index is before a segment with a larger segment index in the mapping order of the L segments.

In an embodiment, the first communication node maps segments within each layer of the precoding matrix information to an information sequence in sequence based on the size of the index of each layer of the precoding matrix information, and when mapping the segments within each layer, the first communication node maps the segments within each layer to the information sequence in sequence according to the sizes of the indexes of the segments within each layer.

As an example, the precoding matrix information has a total of four layers. The first communication node first acquires all of segments in a 1st layer with a layer index number of 1 and determines an index of each segment in the 1st layer, and maps all of segments in the 1st layer to the information sequence in ascending order of segment indexes. Then, the first communication node acquires all of segments in a 2nd layer with a layer index number of 2 and determines an index of each segment in the 2nd layer, and maps all of segments in the 2nd layer to the information sequence in ascending order of segment indexes. After that, the first communication node acquires all of segments in a 3rd layer with a layer index number of 3 and determines an index of each segment in the 3rd layer, and maps all of segments in the 3rd layer to the information sequence in ascending order of segment indexes. Finally, the first communication node acquires all of segments in a 4th layer with a layer index number of 4 and determines an index of each segment in the 4th layer, and maps all of segments in the 4th layer to the information sequence in ascending order of segment indexes.

As another embodiment, a segment with a smaller segment index is before a segment with a larger segment index in the mapping order of the L segments. For two segments with a same segment index, a segment with a smaller layer index is before a segment with a larger layer index in the mapping order of the L segments.

In an embodiment, the first communication node, based on index order of each layer of the precoding matrix information, selects a segment with the smallest index number among unmapped segments within each layer in sequence to map to the information sequence, until each segment of each layer of the precoding matrix information is mapped to the information sequence.

As an example, the precoding matrix information has a total of four layers. Each layer includes 3 segments. The first communication node first maps a 1st segment with a segment index number of 1 in each layer, which may include that: the first communication node acquires a 1st segment with a segment index number of 1 in a 1st layer with a layer index number of 1, to map it to the information sequence; the first communication node acquires a 1st segment with a segment index number of 1 in a 2nd layer with a layer index number of 2, to map it to the information sequence; the first communication node acquires a 1st segment with a segment index number of 1 in a 3rd layer with a layer index number of 3, to map it to the information sequence; the first communication node acquires a 1st segment with a segment index number of 1 in a 4th layer with a layer index number of 4, to map it to the information sequence.

Then, the first communication node maps a 2nd segment with a segment index number of 2 in each layer, which may include that: the first communication node acquires a 2nd segment with a segment index number of 2 in a 1st layer with a layer index number of 1, to map it to the information sequence; the first communication node acquires a 2nd segment with a segment index number of 2 in a 2nd layer with a layer index number of 2, to map it to the information sequence; the first communication node acquires a 2nd segment with a segment index number of 2 in a 3rd layer with a layer index number of 3, to map it to the information sequence; the first communication node acquires a 2nd segment with a segment index number of 2 in a 4th layer with a layer index number of 4, to map it to the information sequence.

Finally, the first communication node maps a 3rd segment with a segment index number of 3 in each layer, which may include that: the first communication node acquires a 3rd segment with a segment index number of 3 in a 1st layer with a layer index number of 1, to map it to the information sequence; the first communication node acquires a 3rd segment with a segment index number of 3 in a 2nd layer with a layer index number of 2, to map it to the information sequence; the first communication node acquires a 3rd segment with a segment index number of 3 in a 3rd layer with a layer index number of 3, to map it to the information sequence; the first communication node acquires a 3rd segment with a segment index number of 3 in a 4th layer with a layer index number of 4, to map it to the information sequence.

It should be noted that when the first communication node maps the segments to the information sequence, it performs mapping in position order in the information sequence, where a segment mapped first is in the front, and a segment mapped last is in the back.

In some embodiments, the index of each layer is determined in mode 1 or mode 2 as follows.

Mode 1: a layer index of a layer is positively correlated with transmission power corresponding to the layer. That is, the larger the transmission power corresponding to a layer is, the larger the layer index of the layer is.

Mode 2: a layer index of a layer is negatively correlated with transmission power corresponding to the layer. That is, the larger the transmission power corresponding to a layer is, the smaller the layer index of the layer is.

In some embodiments, indexes of segments within a layer may be determined in mode 3 or mode 4 as follows.

Mode 3: a segment index of a segment within a layer is determined according to registration information sent from the first communication node to the second communication node.

Mode 4: a segment index of a segment within a layer is determined according to configuration information.

As an example, the first communication node determines the registration order of segments within a layer according to the registration information. For example, the earlier the registration order of the segment is, the smaller the segment index in the layer is. For another example, the earlier the registration order of the segment is, the larger the segment index in the layer is.

As another example, the first communication node determines the configuration order of segments within a layer according to the configuration information. For example, the earlier the configuration order of the segment is, the smaller the segment index in the layer is. For another example, the earlier the configuration order of the segment is, the larger the segment index in the layer is.

The understanding of the registration order may refer to the description of the registration order in the above scenario 5-3 or scenario 6-3, and will not be repeated here.

The understanding of the configuration order may refer to the description of the configuration order in the above scenario 5-4 or scenario 6-4, and will not be repeated here.

It can be understood that the first communication node may also determine a segment index of a segment within a layer in other modes, which is not limited in the present disclosure. For example, the first communication node may determine the segment index of the segment within the layer according to the bit number of the segment. The first communication node determines that the more the bit number of the segment is, the smaller the segment index in the layer is; or the first communication node determines that the more the bit number of the segment is, the larger the segment index in the layer is.

In the embodiments of the present disclosure, in the case where the sort order related to the L segments is the mapping order of the L segments, the mapping order of the L segments needs to be synchronized between the first communication node and the second communication node. In this way, the first communication node may sort the L segments in the mapping order and select K segments therefrom, and then, the second communication node may use the same mapping order to recover the K segments among the L segments, and determine precoding matrix information, so as to improve the consistency of the precoding matrix information between the first communication node and the second communication node.

The mode for synchronizing the mapping order of the L segments between the first communication node and the second communication node may include at least one of the following synchronization mode 1, synchronization mode 2, and synchronization mode 3. Each of them will be described in detail below.

Synchronization mode 1: the mapping order of the L segments is configured by the second communication node to the first communication node.

The second communication node may configure the mapping order of the L segments by configuration information sent to the first communication node; or configure the mapping order of the L segments to the first communication node by indication information other than the configuration information. The present disclosure is not limited thereto.

In an exemplary implementation, the second communication node may directly indicate a sequence number of each segment of the L segments, to the first communication node. The first communication node determines the mapping order of the L segments by the sequence number of each segment.

Alternatively, the second communication node may indicate a sort number to the first communication node, where each sort number corresponds to a type of sort order of segments; and the first communication node uses the sort order corresponding to the sort number as the mapping order of the L segments.

Alternatively, the second communication node may indicate a mapping mode to the first communication node. The first communication node determines the mapping order of the L segments according to the mapping mode indicated by the second communication node.

As an example, the mapping order mode in the embodiments of the present disclosure includes but is not limited to at least one of the following mapping mode 1 to mapping mode 5.

Mapping mode 1: a segment with a smaller layer index is before a segment with a larger layer index in the mapping order of the L segments; and for two segments with a same layer index, a segment with a smaller segment index is before a segment with a larger segment index in the mapping order of the L segments.

Mapping mode 2: a segment with a smaller segment index is before a segment with a larger segment index in the mapping order of the L segments; and for two segments with a same segment index, a segment with a smaller layer index is before a segment with a larger layer index in the mapping order of the L segments.

The implementations of the mapping mode 1 and the mapping mode 2 may refer to the above implementations that the mapping order of the L segments is determined according to the layer index corresponding to each of the L segments and the segment index in the layer corresponding to each of the L segments, and will not be repeated here.

Mapping mode 3: the mapping order of the L segments is descending order of bit numbers of the segments.

Mapping mode 4: the mapping order of the L segments is ascending order of bit numbers of the segments.

Mapping mode 5: the mapping order of the L segments is order in the registration order of the L segments. The understanding of the registration order may refer to the description of the registration order in the above scenario 5.3 or scenario 6.3, and will not be repeated here.

Synchronization mode 2: the mapping order of the L segments is indicated by the first communication node to the second communication node.

The first communication node may indicate the mapping order of the L segments to the second communication node, while sending K segments of the L segments of the precoding matrix to the second communication node. That is, indication information for indicating the mapping order of the L segments is carried in a same signaling message as the K segments of the L segments of the precoding matrix.

Alternatively, the second communication node may indicate the mapping order of the L segments to the second communication node, at a time other than that of sending the K segments of the L segments of the precoding matrix to the second communication node. That is, the indication information for indicating the mapping order of the L segments and the K segments of the L segments of the precoding matrix are carried in different signaling messages. The present disclosure is not limited thereto.

In an implementation, the first communication node may directly indicate a sequence number of each segment of the L segments to the second communication node; and the second communication node determines the mapping order of the L segments by the sequence number of each segment.

Alternatively, the first communication node may indicate a sort number to the second communication node, where each sort number corresponds to a type of sort order of segments; and the second communication node uses the sort order corresponding to the sort number as the mapping order of the L segments.

Alternatively, the first communication node may indicate a mapping mode to the second communication node; and the second communication node determines the mapping order of the L segments according to the mapping mode indicated by the first communication node.

The understanding of the mapping mode may refer to the description in the mapping mode 1 to the mapping mode 5 recorded in the above synchronization mode 1, and will not be repeated here.

Synchronization mode 3: the first communication node and the second communication node synchronize some mapping order of the L mapping order.

In some embodiments, the mapping order of the L segments includes first-part mapping order and second-part mapping order; the first-part mapping order is mapping order of first P segments in the mapping order of the L segments; the second-part mapping order is mapping order of last L-P segments in the mapping order of the L segments, P is a positive integer and P is less than L.

In some embodiments, the first-part mapping order is configured by the second communication node to the first communication node, and the second-part mapping order is indicated by the first communication node to the second communication node.

The process of the second communication node configuring the first-part mapping order to the first communication node may refer to the process of the second communication node configuring the mapping order of the L segments to the first communication node in the above synchronization mode 1, and will not be repeated here.

The process of the first communication node indicating the second-part mapping order to the second communication node may refer to the process of the first communication node indicating the mapping order of the L segments to the second communication node in the above synchronization mode 2, and will not be repeated here.

In this way, the first communication node and the second communication node indicate to each other some mapping order in the mapping order of the L segments, and the first communication node and the second communication node may determine the complete mapping order of the L segments by the content indicated to each other.

In some embodiments, the first-part mapping order is determined by a pre-configuration, and the second-part mapping order is indicated by the first communication node to the second communication node.

The first-part mapping order being determined by the pre-configuration may be implemented as being pre-determined by a protocol, and both the first communication node and the second communication node determine the first-part mapping order according to this protocol.

The process of the first communication node indicating the second-part mapping order to the second communication node may refer to the process of the first communication node indicating the mapping order of the L segments to the second communication node in the above synchronization mode 2, and will not be repeated here.

In the embodiments of the present disclosure, segments in the first-part mapping order in the mapping order of the L segments are generally more important segments, and the order of this part of segments is generally more stable and changes less with the change of the channel state, and specifying the mapping order of this part by a protocol may ensure certain transmission performance when the first communication node and the second communication node precode according to the segments in the mapping order of this par. Pre-determining the order of this part of segments by the protocol may reduce the configuration information overhead or signaling overhead of the second communication node, and may also reduce the reporting overhead of the first communication node.

The information of the channel state change between the first communication node and the second communication node is generally represented in segments in the second-part mapping order, and the mapping order of this part changes rapidly with the change of the channel state information. The first communication node indicating the second-part mapping order to the second communication node, may enable the first communication node and the second communication node to synchronize the change of the channel in more real time, and improve the transmission performance between the first communication node and the second communication node.

In some embodiments, the first-part mapping order is determined by a pre-configuration, and the second-part mapping order is configured by the second communication node to the first communication node.

The first-part mapping order being determined by the pre-configuration may be implemented as being pre-determined by a protocol, and both the first communication node and the second communication node determine the first-part mapping order according to this protocol.

The process of the second communication node configuring the second-part mapping order to the first communication node may refer to the process of the second communication node configuring the mapping order of the L segments to the first communication node in the above synchronization mode 1, and will not be repeated here.

In some embodiments, the first-part mapping order is indicated by configuration information, and the second-part mapping order is indicated by signaling different from the configuration information.

In the embodiments of the present disclosure, since the order of this part of segments in the first-part mapping order is generally more stable and changes less with the change of the channel state, the first-part mapping order is configured by the configuration information sent from the second communication node to the first communication node, and after the first communication node is configured according to the configuration information, it only needs to feed back to the second communication node by the same feedback information as before, without sending an additional feedback message, which may save the feedback overhead of the first communication node. In addition, the first communication node may also control the first-part mapping order according to usage requirements for the segments. The second-part mapping order changes rapidly with the change of the channel, and is indicated by first signaling different from the configuration information, and in this way, the second-part mapping order may be synchronized more quickly, thereby better adapting to the channel change between the first communication node and the second communication node, and avoiding the performance loss.

It can be understood that in order to implement the above functions, a transmission apparatus for precoding matrix information includes the corresponding hardware structures and/or software modules for performing each function. Those skilled in the art should easily realize that, in conjunction with the algorithmic steps of each example described in the embodiments of the present disclosure, the present disclosure can be implemented in the form of hardware or a combination of hardware and computer software. Whether a certain function is performed by hardware or computer software driving hardware, depends on the specific applications and design constraints of the technical solutions. Professional technicians may use different methods for each specific application to implement the described functions, but such an implementation should not be regarded as beyond the scope of the present disclosure.

In the embodiments of the present disclosure, the transmission apparatus for precoding matrix information may be divided into functional modules according to the above-mentioned method embodiments, and for example, each functional module may be divided corresponding to each function, or two or more functions may be integrated into one functional module. The above-mentioned integrated module may be implemented in the form of hardware or may be implemented in the form of software. It should be noted that the division of modules in the embodiments of the present disclosure is illustrative, and is merely a kind of logical functional division, and there may be other division methods in actual implementations. The example in which each functional module may be divided corresponding to each function is taken for explanation below.

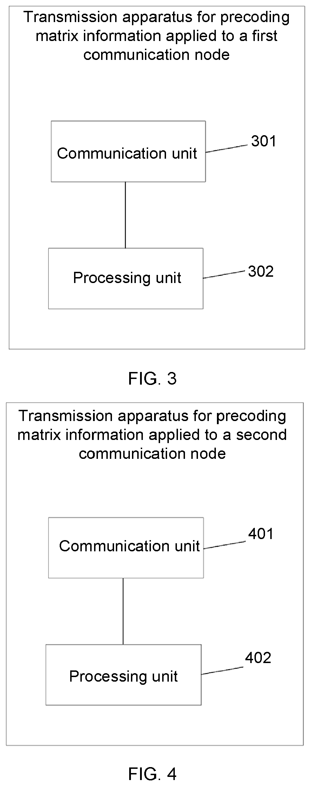

FIG. 3 is a structural schematic diagram of a transmission apparatus for precoding matrix information applied to a first communication node provided in the embodiments of the present disclosure, and the transmission apparatus for precoding matrix information may perform the method related to the first communication node in the transmission method for precoding matrix information provided in the above method embodiments. As shown in FIG. 3, the transmission apparatus for precoding matrix information includes: a communication unit 301 and a processing unit 302.

The communication unit 301 is configured to receive configuration information sent from a second communication node.

The processing unit 302 is configured to send K segments among L segments of precoding matrix information to the second communication node, according to the configuration information, where both L and K are positive integers, and K is less than or equal to L.

In some embodiments, the K segments are first K segments in sort order related to the L segments.

In some embodiments, the sort order related to the L segments includes any one of: mapping order of the L segments, registration order of the L segments, or configuration order of the L segments; where the mapping order of the L segments is order in which the L segments are mapped to an information sequence corresponding to the precoding matrix information; the registration order of the L segments is order in which the L segments are registered by the first communication node to the second communication node; and the configuration order of the L segments is order in which the L segments are configured by the second communication node.

In some embodiments, the processing unit is further configured to: determine the K segments from the L segments, according to a number of bits corresponding to each of the L segments.

In some embodiments, the K segments include all or some of segments corresponding to an S-th layer in the precoding matrix information, where S is less than or equal to R, R is a rank of a precoding matrix, and both S and R are positive integers.

In some embodiments, the K segments include all or some of segments corresponding to Q layers in the precoding matrix information, where Q is less than or equal to R, R is a rank of a precoding matrix, and both Q and R are positive integers.

In some embodiments, the K segments are K segments determined from an I-th segment corresponding to each layer in the precoding matrix information, where I is a positive integer.

In some embodiments, an I-th segment corresponding to a layer is determined based on sort order of segments within the layer; and the sort order of the segments within the layer includes any one of:
index order of the segments within the layer,
mapping order of the segments within the layer,
registration order of the segments within the layer,
configuration order of the segments within the layer, or
size order of bit numbers of the segments within the layer.

In some embodiments, the K segments are K segments determined from a 1st segment to an I-th segment corresponding to each of Q layers in the precoding matrix information, where Q is less than or equal to R, R is a rank of a precoding matrix, and I, Q, and R are all positive integers.

In some embodiments, a 1st segment to an I-th segment corresponding to a layer is determined based on sort order of segments within the layer; and the sort order of the segments within the layer is any one of:
index order of the segments within the layer,
mapping order of the segments within the layer,
registration order of the segments within the layer,
configuration order of the segments within the layer, or
size order of bit numbers of the segments within the layer.

In some embodiments, the mapping order of the L segments is determined according to a layer index corresponding to each of the L segments and a segment index within a layer corresponding to each of the L segments.

In some embodiments, a segment with a smaller layer index is before a segment with a larger layer index in the mapping order of the L segments; and for two segments with a same layer index, a segment with a smaller segment index is before a segment with a larger segment index in the mapping order of the L segments.

In some embodiments, a segment with a smaller segment index is before a segment with a larger segment index in the mapping order of the L segments; and for two segments with a same segment index, a segment with a smaller layer index is before a segment with a larger layer index in the mapping order of the L segments.

In some embodiments, a layer index of a layer is positively correlated with transmission power corresponding to the layer.

In some embodiments, a layer index of a layer is negatively correlated with transmission power corresponding to the layer.

In some embodiments, a segment index of a segment in a layer is determined according to registration information sent from the first communication node to the second communication node; or a segment index of a segment in a layer is determined according to the configuration information.

In some embodiments, the mapping order of the L segments is indicated by the second communication node to the first communication node.

In some embodiments, the mapping order of the L segments is indicated by the first communication node to the second communication node.

In some embodiments, the mapping order of the L segments includes first-part mapping order and second-part mapping order; where the first-part mapping order is mapping order of first P segments in the mapping order of the L segments; and the second-part mapping order is mapping order of later L-P segments in the mapping order of the L segments, where P is a positive integer, and P is less than L.

In some embodiments, the first-part mapping order is configured by the second communication node to the first communication node, and the second-part mapping order is indicated by the first communication node to the second communication node.

In some embodiments, the first-part mapping order is determined by a pre-configuration, and the second-part mapping order is indicated by the first communication node to the second communication node.

In some embodiments, the first-part mapping order is determined by a pre-configuration, and the second-part mapping order is configured by the second communication node to the first communication node.

In some embodiments, the first-part mapping order is indicated by the configuration information, and the second-part mapping order is indicated by signaling different from the configuration information.

FIG. 4 is a structural schematic diagram of a transmission apparatus for precoding matrix information applied to a second communication node provided in the embodiments of the present disclosure, and the transmission apparatus for precoding matrix information may perform the method related to the second communication node in the transmission method for precoding matrix information provided in the above method embodiments. As shown in FIG. 4, the transmission apparatus for precoding matrix information includes: a communication unit 401 and a processing unit 402.

The processing unit 402 is configured to indicate the communication unit 401 to send configuration information to a first communication node.

The processing unit 402 is further configured to indicate the communication unit 401 to receive K segments of L segments of precoding matrix information sent from the first communication node, where both L and K are positive integers, and K is less than or equal to L.

In some embodiments, the K segments are first K segments in sort order related to the L segments.

In some embodiments, the sort order related to the L segments includes any one of: mapping order of the L segments, registration order of the L segments, or configuration order of the L segments; where the mapping order of the L segments is order in which the L segments are mapped to an information sequence corresponding to the precoding matrix information; the registration order of the L segments is order in which the L segments are registered by the first communication node to the second communication node; and the configuration order of the L segments is order in which the L segments are configured by the second communication node.

In some embodiments, the K segments are K segments with required bit numbers, among the L segments.

In some embodiments, the K segments include all or some of segments corresponding to an S-th layer in the precoding matrix information, where S is less than or equal to R, R is a rank of a precoding matrix, and both S and R are positive integers.

In some embodiments, the K segments include all or some of segments corresponding to Q layers in the precoding matrix information, where Q is less than or equal to R, R is a rank of a precoding matrix, and both Q and R are positive integers.

In some embodiments, the K segments are K segments determined from an I-th segment corresponding to each layer in the precoding matrix information, where I is a positive integer.

In some embodiments, an I-th segment corresponding to a layer is determined based on sort order of segments within the layer; and the sort order of the segments within the layer includes any one of:
index order of the segments within the layer,
mapping order of the segments within the layer,
registration order of the segments within the layer,
configuration order of the segments within the layer, or
size order of bit numbers of the segments within the layer.

In some embodiments, the K segments are K segments determined from a 1st segment to an I-th segment corresponding to each of Q layers in the precoding matrix information, where Q is less than or equal to R, R is a rank of a precoding matrix, and I, Q, and R are all positive integers.

In some embodiments, a 1st segment to an I-th segment corresponding to a layer is determined based on sort order of segments within the layer; and the sort order of the segments within the layer is any one of:
index order of the segments within the layer,
mapping order of the segments within the layer,
registration order of the segments within the layer,
configuration order of the segments within the layer, or
size order of bit numbers of the segments within the layer.

In some embodiments, the mapping order of the L segments is determined according to a layer index corresponding to each of the L segments and a segment index within a layer corresponding to each of the L segments.

In some embodiments, a segment with a smaller layer index is before a segment with a larger layer index in the mapping order of the L segments; and for two segments with a same layer index, a segment with a smaller segment index is before a segment with a larger segment index in the mapping order of the L segments.

In some embodiments, a segment with a smaller segment index is before a segment with a larger segment index in the mapping order of the L segments; and for two segments with a same segment index, a segment with a smaller layer index is before a segment with a larger layer index in the mapping order of the L segments.

In some embodiments, a layer index of a layer is positively correlated with transmission power corresponding to the layer.

In some embodiments, a layer index of a layer is negatively correlated with transmission power corresponding to the layer.

In some embodiments, a segment index of a segment in a layer is determined according to registration information sent from the first communication node to the second communication node; or a segment index of a segment in a layer is determined according to the configuration information.

In some embodiments, the mapping order of the L segments is indicated by the second communication node to the first communication node.

In some embodiments, the mapping order of the L segments is indicated by the first communication node to the second communication node.

In some embodiments, the mapping order of the L segments includes first-part mapping order and second-part mapping order; where the first-part mapping order is mapping order of first P segments in the mapping order of the L segments; and the second-part mapping order is mapping order of later L-P segments in the mapping order of the L segments, where P is a positive integer, and P is less than L.

In some embodiments, the first-part mapping order is configured by the second communication node to the first communication node, and the second-part mapping order is indicated by the first communication node to the second communication node.

In some embodiments, the first-part mapping order is determined by a pre-configuration, and the second-part mapping order is indicated by the first communication node to the second communication node.

In some embodiments, the first-part mapping order is determined by a pre-configuration, and the second-part mapping order is configured by the second communication node to the first communication node.

In some embodiments, the first-part mapping order is indicated by the configuration information, and the second-part mapping order is indicated by signaling different from the configuration information.

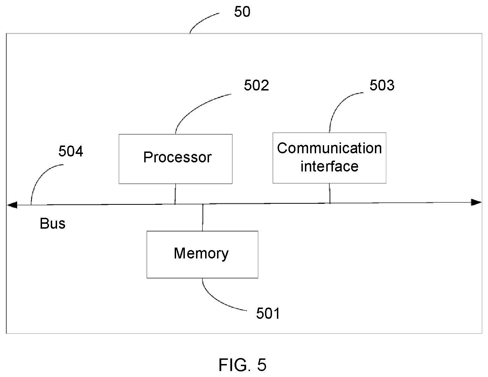

In a case of implementing the functions of the integrated modules mentioned above in the form of hardware, the embodiments of the present disclosure provide another possible structure of the transmission apparatus for precoding matrix information involved in the above embodiments. As shown in FIG. 5, the transmission apparatus for precoding matrix information 50 includes: a processor 502 and a bus 504. According to some embodiments of the present disclosure, the transmission apparatus for precoding matrix information may also include a memory 501; according to some embodiments of the present disclosure, the transmission apparatus for precoding matrix information may also include a communication interface 503.

The processor 502 may implement or perform various exemplary logical blocks, modules or circuits described in conjunction with the embodiments of the present disclosure. The processor 502 may be a central processing unit, a general-purpose processor, a digital signal processor, an application specific integrated circuit, a field programmable gate array or other programmable logic devices, a transistor logic device, a hardware component or any combination thereof, which may implement or perform various exemplary logical blocks, modules and circuits described in conjunction with the embodiments of the present disclosure. The processor 502 may also be a combination that implements computing functions, for example, including a combination of one or more microprocessors, a combination of a digital signal processor (DSP) and a microprocessor, or the like.

The communication interface 503 is configured to connect with other devices via a communication network. The communication network may be an Ethernet, a radio access network, a wireless local area network (WLAN), or the like.

The memory 501 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As a possible implementation, the memory 501 may exist independently of the processor 502, and the memory 501 may be connected to the processor 502 via the bus 504 and used for storing instructions or program codes. The processor 502, when calling and executing the instructions or program codes stored in the memory 501, is capable of implementing the transmission method for precoding matrix information provided in the embodiments of the present disclosure.

In another possible implementation, the memory 501 may also be integrated with the processor 502.

The bus 504 may be an extended industry standard architecture (EISA) bus or the like. Buses 504 may be divided into address buses, data buses, control buses, and the like. For the convenience of representation, only one thick line is used in FIG. 5 for representation, but it does not mean that there is only one bus or one type of bus.

Some embodiments of the present disclosure provide a computer-readable storage medium (e.g., a non-transitory computer-readable storage medium), and the computer-readable storage medium has stored computer program instructions therein that, when running on a computer, cause the computer to perform the transmission method for precoding matrix information as described in any of the above-mentioned embodiments.

Exemplarily, the above-mentioned computer-readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer-readable storage media described in the present disclosure may represent one or more devices and/or other machine-readable storage media for storing information. The term "machine-readable storage medium" may include, but be not limited to, a radio channel and various other media capable of storing, containing, and/or carrying instructions and/or data.

The embodiments of the present disclosure provide a computer program product including instructions, and the computer program product, when running on a computer, causes the computer to perform the transmission method for precoding matrix information as described in any embodiment of the above-mentioned embodiments.

The foregoing is only the specific implementations of the present disclosure, but the protection scope of the present disclosure is not limited thereto, and any changes or substitutions within the scope of the technologies disclosed in the present disclosure should be covered within the protection scope of the present disclosure. Therefore, the protection scope of the present disclosure should be based on the protection scope of claims.

## Claims

1. A transmission method for precoding matrix information, **characterized in that** the method is applied to a first communication node, and comprises:
receiving configuration information sent from a second communication node; and
sending K segments among L segments of precoding matrix information to the second communication node, according to the configuration information, wherein both L and K are positive integers, and K is less than or equal to L.

2. The method according to claim 1, wherein the K segments are first K segments in sort order related to the L segments.

3. The method according to claim 2, wherein the sort order related to the L segments comprises any one of: mapping order of the L segments, registration order of the L segments, or configuration order of the L segments; wherein the mapping order of the L segments is order in which the L segments are mapped to an information sequence corresponding to the precoding matrix information; the registration order of the L segments is order in which the L segments are registered by the first communication node to the second communication node; and the configuration order of the L segments is order in which the L segments are configured by the second communication node.

4. The method according to claim 1, further comprising:
determining the K segments from the L segments, according to a number of bits corresponding to each of the L segments.

5. The method according to claim 1, wherein the K segments comprise all or some of segments corresponding to an S-th layer in the precoding matrix information, wherein S is less than or equal to R, R is a rank of a precoding matrix, and both S and R are positive integers.

6. The method according to claim 1, wherein the K segments comprise all or some of segments corresponding to Q layers in the precoding matrix information, wherein Q is less than or equal to R, R is a rank of a precoding matrix, and both Q and R are positive integers.

7. The method according to claim 1, wherein the K segments are K segments determined from an I-th segment corresponding to each layer in the precoding matrix information, wherein I is a positive integer.

8. The method according to claim 7, wherein before sending the K segments, the method further comprises: determining an I-th segment corresponding to a layer, based on sort order of segments within the layer; wherein the sort order of the segments within the layer comprises any one of:
index order of the segments within the layer,
mapping order of the segments within the layer,
registration order of the segments within the layer,
configuration order of the segments within the layer, or
size order of bit numbers of the segments within the layer.

9. The method according to claim 1, wherein the K segments are K segments determined from a 1st segment to an I-th segment corresponding to each of Q layers in the precoding matrix information, wherein Q is less than or equal to R, R is a rank of a precoding matrix, and I, Q, and R are all positive integers.

10. The method according to claim 9, wherein before sending the K segments, the method further comprises: determining a 1st segment to an I-th segment corresponding to a layer, based on sort order of segments within the layer; wherein the sort order of the segments within the layer is any one of:
index order of the segments within the layer,
mapping order of the segments within the layer,
registration order of the segments within the layer,
configuration order of the segments within the layer, or
size order of bit numbers of the segments within the layer.

11. The method according to claim 3, wherein the mapping order of the L segments is determined according to a layer index corresponding to each of the L segments and a segment index within a layer corresponding to each of the L segments.

12. The method according to claim 11, wherein a segment with a smaller layer index is before a segment with a larger layer index in the mapping order of the L segments; and for two segments with a same layer index, a segment with a smaller segment index is before a segment with a larger segment index in the mapping order of the L segments.

13. The method according to claim 11, wherein a segment with a smaller segment index is before a segment with a larger segment index in the mapping order of the L segments; and for two segments with a same segment index, a segment with a smaller layer index is before a segment with a larger layer index in the mapping order of the L segments.

14. The method according to claim 11, wherein a layer index of a layer is positively correlated with transmission power corresponding to the layer.

15. The method according to claim 11, wherein a layer index of a layer is negatively correlated with transmission power corresponding to the layer.

16. The method according to claim 11, wherein a segment index of a segment in a layer among the L segments is determined according to registration information sent from the first communication node to the second communication node; or a segment index of a segment in a layer among the L segments is determined according to the configuration information.

17. The method according to claim 3, wherein the mapping order of the L segments is indicated by the second communication node to the first communication node.

18. The method according to claim 3, wherein the mapping order of the L segments is indicated by the first communication node to the second communication node.

19. The method according to claim 3, wherein the mapping order of the L segments comprises first-part mapping order and second-part mapping order; wherein the first-part mapping order is mapping order of first P segments in the mapping order of the L segments; and the second-part mapping order is mapping order of later L-P segments in the mapping order of the L segments, wherein P is a positive integer, and P is less than L.

20. The method according to claim 19, wherein the first-part mapping order is configured by the second communication node to the first communication node, and the second-part mapping order is indicated by the first communication node to the second communication node.

21. The method according to claim 19, wherein the first-part mapping order is determined by a pre-configuration, and the second-part mapping order is indicated by the first communication node to the second communication node.

22. The method according to claim 19, wherein the first-part mapping order is determined by a pre-configuration, and the second-part mapping order is configured by the second communication node to the first communication node.

23. The method according to claim 19, wherein the first-part mapping order is indicated by the configuration information, and the second-part mapping order is indicated by signaling different from the configuration information.

24. A transmission method for precoding matrix information, **characterized in that** the method is applied to a second communication node, and comprises:
sending configuration information to a first communication node; and
receiving K segments among L segments of precoding matrix information sent from the first communication node, where both L and K are positive integers, and K is less than or equal to L.

25. The method according to claim 24, wherein the K segments are first K segments in sort order related to the L segments.

26. The method according to claim 25, wherein the sort order related to the L segments comprises any one of: mapping order of the L segments, registration order of the L segments, or configuration order of the L segments; wherein the mapping order of the L segments is order in which the L segments are mapped to an information sequence corresponding to the precoding matrix information; the registration order of the L segments is order in which the L segments are registered by the first communication node to the second communication node; and the configuration order of the L segments is order in which the L segments are configured by the second communication node.

27. The method according to claim 24, wherein the K segments are K segments with required bit numbers, among the L segments.

28. The method according to claim 24, wherein the K segments comprise all or some of segments corresponding to an S-th layer in the precoding matrix information, wherein S is less than or equal to R, R is a rank of the precoding matrix, and both S and R are positive integers.

29. A transmission apparatus for precoding matrix information, **characterized by** comprising: a memory and a processor, wherein the memory is coupled with the processor, the memory is configured to store instructions executable by the processor; and the processor, when executing the instructions, performs the method according to any one of claims 1 to 28.

30. A computer-readable storage medium, **characterized in that** computer instructions are stored on the computer-readable storage medium, and the computer instructions, when executed on a computer, cause the computer to perform the method according to any one of claims 1 to 28.
